# EUROPEAN PATENT APPLICATION

(11) **EP 4 598 144 A1**
(43) Date of publication of application: **06.08.2025**
(21) Application number: 23872884.4
(22) Date of filing: 14.09.2023
(51) Int. Cl.: H04W 52/02, H04W 72/23, H04L 5/00

(54) **METHOD AND DEVICE FOR CONFIGURING RESOURCE IN WIRELESS COMMUNICATION SYSTEM**

(30) Priority: 29.09.2022 KR 20220124757
(71) Applicant: LG Electronics Inc., Yeongdeungpo-gu Seoul 07336 (KR)
(72) Inventor: CHOI, Seunghwan, Seoul 06772 (KR); YANG, Suckchel, Seoul 06772 (KR); KIM, Seonwook, Seoul 06772 (KR)
(74) Representative: Frenkel, Matthias Alexander
(86) International application number: PCT/KR2023/013820
(87) International publication number: WO 2024/071765

(57) **Abstract**

A method and device for configuring a resource in a wireless communication system, disclosed in the present specification, may activate and/or deactivate SCells by means of a group common SCell activation/deactivation MAC CE.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

The object of the present disclosure is to provide a method of efficiently configuring resources in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for configuring resources in a wireless communication system.

In an aspect of the present disclosure, provided herein is a method of configuring radio resources by a user equipment (UE) in a wireless communication system. The method includes: configuring first secondary cells (SCells); receiving an SCell activation/deactivation medium access control (MAC) control element (CE); and activating or deactivating each of the first SCells based on the received SCell activation/deactivation MAC CE. The SCell activation/deactivation MAC CE includes C fields for indicating activation and deactivation of the first SCells configured for the UE and second SCells configured for another UE.

In another aspect of the present disclosure, provided herein are an apparatus, processor, and storage medium configured to perform the resource configuration method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to an embodiment of the present disclosure, when resources for wireless signal transmission and reception are configured, there is an advantage of enabling more efficient resource usage through operations differentiated from those in the prior art.

It will be appreciated by persons skilled in the art that the effects that may be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 6 is diagrams illustrating methods for transmitting and receiving a signal according to the embodiments of the present disclosure.
FIGS. 7 to 10 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

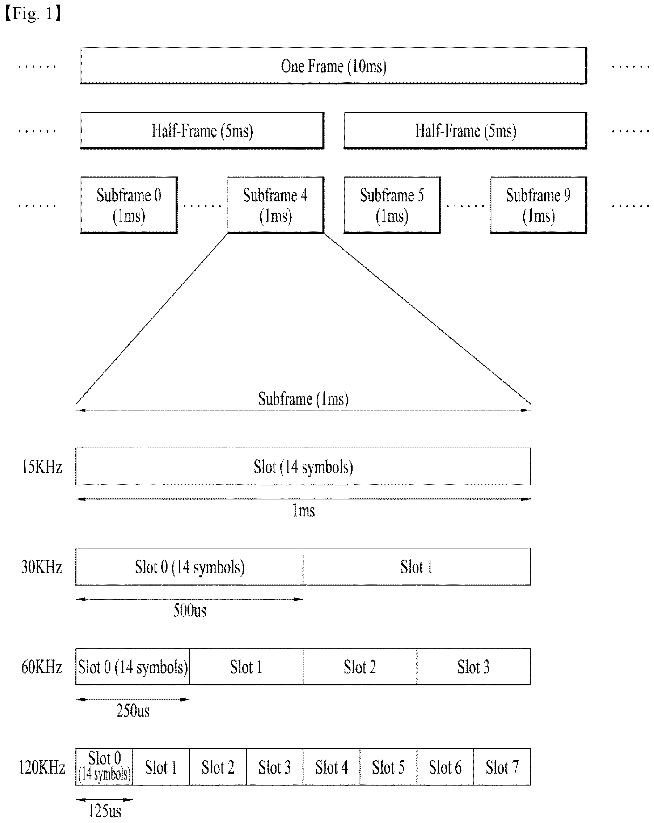

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 1.5KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

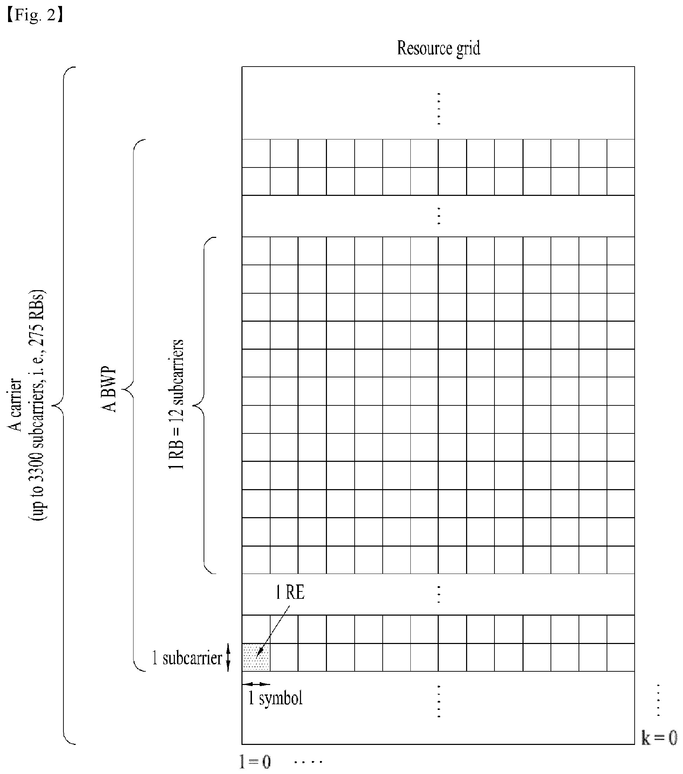

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m ∈ {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

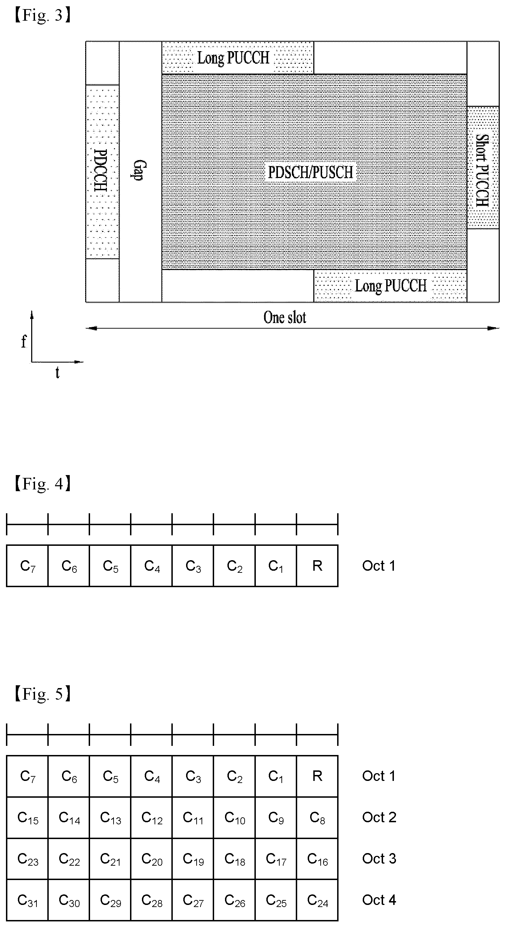

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### Resource Configuration in Network Energy Saving (NES) Mode

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

For energy saving at the BS, a network energy saving (NES) mode (i.e., a mode for energy saving at the BS) may be defined. A BS operating in the NES mode may reduce the power consumption thereof by suspending (holding) DL or UL transmission for a specific period or limiting transmission and reception operations in specific frequency bands. In the present disclosure, the NES mode may refer to the operational mode of the BS and/or UE that is defined/configured/indicated for such a purpose. Additionally, in the present disclosure, the operational mode of the UE (or cell) where the NES mode (or NES-based configuration) is not configured is referred to as non-NES mode to distinguish the operational mode from the NES mode.

The NES mode may be maintained only for a specific time period. In the proposals described later, a time period during which the BS operates in the NES mode is referred to as a NES duration. The NES mode may be valid only for specific frequency resources. In the proposals described later, frequency resources corresponding to the NES mode are referred to as an NES band.

The NES mode may be configured by the BS through separate higher layer signaling or higher layer configurations. Alternatively, the NES mode may be dynamically configured to the BS/UE through other control channels (e.g., DCI-based indication) or data channels (e.g., PDSCH, PUSCH). During the NES mode, the BS may turn on/off specific time, frequency, antenna resources, etc., and may not transmit/receive related data channels, control channels, or control signals. During the NES mode, the UE may operate by expecting that specific time/frequency/antenna resources will be turned on/off and that related channels/signals will not be transmitted.

A BWP for the NES mode (NES BWP) may be defined/configured for UE having defined/configured the NES mode. The NES BWP may be set as a separate BWP that operates only in the NES mode. In this case, a BWP for the non NES mode may not be defined or deactivated. Alternatively, a specific (single) BWP may be configured differently for the NES mode and non-NES mode. For example, a specific BWP may be set as the NES BWP during the NES duration and set as a different BWP during other durations. The configuration methods and constraints of the NES BWP may be defined/configured separately from the conventional BWP. For example, in the NES BWP, PDCCH monitoring may not be performed, but aperiodic CSI-RS signals and reports may be configured. As another example, the periodicity of a periodic CSI-RS may be reinterpreted in the NES BWP.

A unique BWP switching operation in the NES mode may be defined. For example, in the conventional BWP switching configuration/operation, when a BWP other than the default BWP is the active BWP, a timer is set. If the timer expires, the current active BWP is switched to inactive, and the default BWP reverts to the new active BWP. On the other hand, in the NES mode, if the timer expires, the current active BWP may be switched to inactive, and the dormant BWP or NES BWP may switch to the new active BWP. Alternatively, if the timer expires, the current active BWP may switch to inactive, and the default BWP may switch to the new active BWP (as in the conventional operation). If no DL/UL transmission is scheduled/configured in the default BWP for a certain period, the default BWP may switch to inactive, and the dormant BWP or NES BWP may switch to the new active BWP.

The proposed methods described later may be applied independently under the conditions described for each method or configured only during the NES duration. Alternatively, the methods may be applied only in the NES band.

In the proposed methods described later, operating in the non-NES mode means arbitrary NR configurations/operations that are not configured for NES (e.g., configurations/operations specified in Rel-15, Rel-16, or Rel-17 NR specifications). In the proposed methods described later, an operation of switching to the NES mode may only be applied to UEs/cells configured for NES. Additionally, the NES mode is not limited to specific configurations or operational methods. That is, the NES mode may be any configuration or operational method defined/configured for NES. In the proposed methods described later, switching to the NES mode may also be understood as switching to the NES BWP.

In the proposed methods described later, the expression "a specific parameter (or operation) is configured" may be understood as meaning that the parameter (or operation) is configured for an arbitrary cell, for a specific UE, for a configured cell of a specific UE, for a configured DL (or UL) BWP of a specific cell, or for an active DL (or UL) BWP of a specific cell.

For convenience of explanation, in the present disclosure, a DL BWP and/or UL BWP may be simply referred to as a BWP. Unless otherwise specified, the DL BWP and/or UL BWP may refer to a BWP (configured for the UE) or an active BWP (among configured BWPs). [59]

In the proposed method described later, a MAC control element (CE) or DCI (e.g., a MAC CE or DCI triggering BWP switching or configuring/activating/deactivating specific operations) may be transmitted in a UE-specific, UE group-common, or cell-specific manner. The DCI may be scrambled with an RNTI configured in a UE-specific, UE group-common, or cell-specific manner and then transmitted. The MAC CE may be transmitted over a PDSCH scheduled by DCI scrambled with an RNTI configured in a UE-specific, UE group-common, or cell-specific manner.

### [1] Method of configuring activation/deactivation of secondary cell (SCell) through group common (GC) MAC CE

[1-1] In Rel-15/16/17, SCell activation/deactivation (for each UE) may be configured through a MAC CE dedicated to the corresponding UE. In this case, the MAC CE command may be composed of either 1 octet or 4 octets (with a logical channel identity (LCID) size). If the number of SCells configured for the UE is 7 or fewer, 1 octet is used. If the number of SCells configured for the UE is 7 or more, 4 octets are used. In this case, each bit of the octet (each C-field included in the octet) represents the activation or deactivation of each SCell.

Table 4 extracted from 3GPP TS 38.321 represents the prior art. FIG. 4 illustrates a MAC CE for SCell activation/deactivation, which is composed of 1 octet. FIG. 5 illustrates a MAC CE for SCell activation/deactivation, which is composed of 4 octets.

**[Table 4]**

| | |
|---|---|
| 6.1.3.10 | SCell Activation/Deactivation MAC CEs |
| The SCell Activation/Deactivation MAC CE of one octet is identified by a MAC subheader with LCID as specified in Table 6.2.1-1. It has a fixed size and consists of a single octet containing seven C-fields and one R-field. The SCell Activation/Deactivation MAC CE with one octet is defined as follows (Figure 6.1.3.10-1). | |
| The SCell Activation/Deactivation MAC CE of four octets is identified by a MAC subheader with LCID as specified in Table 6.2.1-1. It has a fixed size and consists of four octets containing 31 C-fields and one R-field. The SCell Activation/Deactivation MAC CE of four octets is defined as follows (Figure 6.1.3.10-2). | |
| - Cᵢ: If there is an SCell configured for the MAC entity with *SCellIndex* i as specified in TS 38.331 [5], this field indicates the activation/deactivation status of the SCell with *SCellIndex* i, else the MAC entity shall ignore the Cᵢ field. The Cᵢ field is set to 1 to indicate that the SCell with *SCellIndex* i shall be activated. The Cᵢ field is set to 0 to indicate that the SCell with *SCellIndex* i shall be deactivated; | |
| - R: Reserved bit, set to 0. | |

Referring to Table 4, the conventional SCell activation/deactivation MAC CE includes C fields and R fields. Referring to FIGS. 4 and 5, each C field consists of 1 bit. Each C field is associated with index i, and index i corresponds to the index (index i) of an SCell configured for the UE. If the value of the C field is 1, the SCell with the corresponding index is activated, and if the value of the C field is 0, the SCell with the corresponding index is deactivated. For example, when the SCell activation/deactivation MAC CE in FIG. 4 is composed of bits 10011010, if the UE receives the MAC CE, SCells with indices 1, 3, 4, and 7 may be activated, while SCells with indices 2, 5, and 6 may be deactivated. The R field is always set to 0 and does not affect the activation/deactivation of the SCells. In Section [1], the bits composing the MAC CE may refer to the C field.

To use such a UE-specific (or UE-dedicated) MAC CE, when a specific cell is configured as an SCell for multiple UEs (with different cell indices), a separate MAC CE command needs to be transmitted to each UE in order to activate or deactivate the cell across all UEs.

[1-2] For the UE configured with the NES mode, SCell activation/deactivation through a MAC CE may be configured and/or indicated to multiple UEs in a GC manner. Accordingly, it may be expected to reduce the amount of MAC CE commands transmitted by the BS. However, when a specific cell is configured as an SCell for multiple UEs, the cell index for the specific cell may differ for each UE. For example, for cell #A, cell #B, and cell #C defined on specific bands (or frequencies), when UE #1 is configured with 2 cells = {cell #A, cell #B} as the SCell, and UE #2 is configured with 2 cells = {cell #B, cell #C} as the SCell, the cell index for cell #B configured to UE #1 may be 2, and the cell index for cell #B configured to UE #2 may be 1. Therefore, when the MAC CE is transmitted in a GC manner, a method may be needed to specify a specific cell for different UEs.

[1-3] Regarding the issue mentioned in [1-2], when the MAC CE is transmitted in a GC manner, the method of indicating a specific cell to different UEs (to ensure a common understanding) may be determined according to one of the following methods (in combination of two or more). Each of the proposed methods below may be particularly applied to the UE configured with the NES mode. However, the present disclosure is not limited thereto.
- Method 1: For N cells (that may be configured for multiple UEs), a GC index may be configured through RRC signaling. For example, the GC index may be index #1, ..., index #N. When some M (<=N) cells are configured as the SCell for the UE, the GC index may be used as the index for the SCell. When the GC MAC CE indicates the GC index, the activation/deactivation of the specific cell may be configured and/or indicated to multiple UEs.
   ■ In this case, information about the N cells (e.g., GC index) may be configured to each UE through UE-specific RRC signaling (before receiving the GC MAC CE).
   ■ In this case, by indicating the GC index through the GC MAC CE, the activation or deactivation of the specific cell may be configured and/or indicated in a GC manner.
   ■ Embodiment) The GC indices for 4 cells = {cell #A, cell #B, cell #C, cell #D} are defined as #1, #2, #3, and #4 in sequence. Each UE receives the information via UE-specific RRC signaling. The UE may be configured with some of the cells along with the indices thereof. UE #1 has {cell #A, cell #B} configured as SCell indices #1 and #2, UE #2 has {cell #B, cell #D} configured as SCell indices #2 and #4, and UE #3 has {cell #D} configured as SCell index #4. In this case, when the BS instructs the activation or deactivation of the cell with index #4 through the GC MAC CE, (UE #1 may ignore the GC MAC CE and) UE #2 and UE #3 may apply the corresponding operation to cell #D.
- Method 2: For N cells (that may be configured for multiple UEs), mapping information between each bit (or field) of the GC MAC CE and the SCell index of each UE may be configured through RRC signaling. Subsequently, the activation/deactivation of the specific cell for multiple UEs may be configured and/or indicated through the GC MAC CE.
   ■ In this case, the mapping information may be configured to each UE through UE-specific RRC signaling (before receiving the GC MAC CE).
   ■ In this case, the mapping information may be configured in the form of a bitmap.
      ◆ Embodiment) It is assumed that among 4 cells = {cell #A, cell #B, cell #C, cell #D}, UE #1 has {cell #A, cell #B} configured as SCells and UE #2 has {cell #B, cell #C, cell #D} configured as SCells. If bitmap #1 = 1100 is configured for UE #1 through UE-specific RRC signaling, the UE may know that the configured SCells are the first and second cells among the total N cells. If bitmap #2 = 0111 is configured for UE #2 through UE-specific RRC signaling, the UE may know that the configured SCells are the second, third, and fourth cells among the total N cells. In this case, if the activation/deactivation for the N cells is indicated through the GC MAC CE, each UE may determine which cells among the N cells are configured as the SCells. For example, if '0110' is configured/indicated through the GC MAC CE, UE #1 may apply the GC MAC CE indication to cell #B by performing an AND operation between '0110' and bitmap #1. Similarly, UE #2 may apply the GC MAC CE indication to cell #B and cell #C by performing an AND operation between '0110' and bitmap #2.
   ■ Alternatively, the mapping information may be configured based on an offset method.
      ◆ Embodiment) It is assumed that among 4 cells = {cell #A, cell #B, cell #C, cell #D}, UE #1 has {cell #A, cell #B} configured as SCells, and UE #2 has {cell #B, cell #C, cell #D} configured as SCells. If offset #1 = 0 is configured for UE #1 through UE-specific RRC signaling, the UE may know that the configured SCells are 2 cells starting from the lowest index among the total N cells. If offset #2 = 1 is configured for UE #2 through UE-specific RRC signaling, the UE may know that the configured SCells are 3 cells starting from the second lowest index among the total N cells. In this case, if the activation/deactivation for the N cells is indicated through the GC MAC CE, each UE may determine which cells among the N cells are configured as the SCells (for the UE). For example, if '0110' is configured/indicated through the GC MAC CE, UE #1 may apply only the first 2 bits from the left of '0110', and UE #2 may apply only the 3 bits starting from the second bit from the left.
- Method 3: Cell indications for K UEs may be serially concatenated to form the GC MAC CE that may be configured for multiple UEs. For example, the GC MAC CE may be configured such that indication information for each UE may be listed separately in the form of {information for UE #1, information for UE #2, ..., information for UE #N}. In this case, each UE may be assigned/configured with the positions of corresponding bits from the GC MAC CE (through separate RRC signaling or DCI). Upon receiving the GC MAC CE, the UE may extract and apply the configuration/indication for cells configured for the UE based on the assigned bit positions.
   ■ For example, it is assumed that among 4 cells = {cell #A, cell #B, cell #C, cell #D}, UE #1 has {cell #A, cell #B} configured as SCells, and UE #2 has {cell #B, cell #C, cell #D} configured as SCells. The GC MAC CE may be configured in the form of {"activation/deactivation indication for cell #A of UE #1", "activation/deactivation indication for cell #B of UE #1", "activation/deactivation indication for cell #B of UE #2", "activation/deactivation indication for cell #C of UE #2 ", "activation/deactivation indication for cell #D of UE #2"} (to represent only the cells configured for each UE). Alternatively, the GC MAC CE may be configured in the form of {"cell #A of UE #1", "cell #B of UE #1", ..., "cell #B of UE #2", "cell #C of UE #2", "cell #D of UE #2"} to represent the total number of cells, regardless of the number of cells configured for each UE.
- Method 4: The mapping information between each bit of the GC MAC CE and the index of the SCell of each UE is configured through separate (UE-dedicated) RRC signaling. Upon receiving the GC MAC CE, the UE may determine the activation/deactivation indication for SCells configured for the UE based on the mapping information.
   ■ For example, it is assumed that among 4 cells = {cell #A, cell #B, cell #C, cell #D}, UE #1 has {cell #A, cell #B} configured as SCells, and UE #2 has {cell #B, cell #C, cell #D} configured as SCells. In this case, cell #A of UE #1 may be mapped to the first bit of the GC MAC CE, cell #B of UE #1 and cell #B of UE #2 may be mapped to the second bit, cell #C of UE #2 may be mapped to the third bit, and cell #D of UE #2 may be mapped to the fourth bit. In this case, if the second bit of the MAC CE configures/indicates the activation or deactivation, both UE #1 and UE #2 may activate or deactivate cell #B.
   ■ In another example, all (or some specific) SCells configured for UE #A may be mapped to specific bits of the GC MAC CE. All (or some specific) SCells configured for UE #B may be mapped to other specific bits of the GC MAC CE. Upon receiving the GC MAC CE, the UE may determine whether the activation or deactivation of each SCell is configured/indicated (based on the mapping relationship between the SCell configured through RRC signaling and the bits of the MAC CE).

[1-4] When the methods in [1-3] are applied, each bit of the GC MAC CE may indicate a single cell or two or more cells. In this case, each UE may receive information on a set of cells indicated by each bit of the GC MAC CE or the number of cells indicated by each bit, through UE-specific RRC signaling.
- For example, each UE may be provided through RRC signaling that each bit of the GC MAC CE indicates a set of specific cells (e.g., intra-band contiguous carriers within a specific band). In this case, K different sets may be collectively activated or deactivated through the K bits of the GC MAC CE.
- In another example, each UE may be provided through RRC signaling that the 1 bit of the GC MAC CE indicates G adjacent cells (e.g., 2 cells). In this case, K*G cells may be collectively activated or deactivated through the K bits of the GC MAC CE.

In this case, if SCells for the UE are configured in specific groups (e.g., the unit of the set of cells or the unit of G adjacent cells), the information indicated by each bit of the GC MAC CE may be configured together when the SCells are configured.

[1-5] If the physical cell ID of each cell is directly indicated through the GC MAC CE, the activation/deactivation configuration for a specific cell may be indicated collectively for multiple UEs.

[1-6] The proposed methods described above may be applied to one of the following cells.
- Opt 1: The proposed methods may be applied to all SCells configured (or configurable) for the UE.
- Opt 2: The proposed methods may be applied to a subset of all SCells configured (or configurable) for the UE.
- Opt 3: The proposed methods may be applied individually to a cell group (e.g., master cell group (MCG) or secondary cell group (SCG)) to which the cells configured (or configurable) for the UE belong.
- Opt 4: The proposed methods may be applied individually based on the frequency range (FR) to which the cells configured (or configurable) for the UE belong.
- Opt 5: The proposed methods may be applied individually based on the band type (e.g., licensed band or unlicensed band) to which the cells configured (or configurable) for the UE belong.
- Opt 6: The proposed methods may be applied to a primary cell (PCell) or primary secondary cell (PSCell) configured (or configurable) for the UE.
   ■ For example, in the methods in [1-3] described above, the bitmap may include both PCells and SCells. Alternatively, some SCells may be replaced by PCells (or PSCells) and applied.

[1-7] The methods in [1-3] to [1-6] may also be applied to SCell activation or deactivation through GC DCI. For example, each bit of the GC DCI may indicate a specific cell or set of cells (for multiple UEs) in the same way that each bit of the MAC CE (described above in Method 1 or 2 of [1-3]) indicates a specific cell. As another example, the GC DCI may be configured such that the activation/deactivation indications for all UEs are listed consecutively (as in Method 3 of [1-3]). As a further example, the GC DCI may indicate a specific cell or set of cells (for multiple UEs) based on the mapping relationship between each bit of the DCI and the SCell of each UE (as in Method 4 of [1-3]).

### [2] Method of configuring BWP switching through GC MAC CE

[2-1]
[2-2] For the UE configured with the NES mode, BWP switching based on a MAC CE may be configured/indicated to multiple UEs in a GC manner. Accordingly, it may be expected to reduce the amount of MAC CE commands transmitted by the BS. However, when a specific cell is configured as an SCell for multiple UEs, the cell index for the specific cell may differ for each UE. For example, for cell #A, cell #B, and cell #C defined on specific bands or frequencies, when UE #1 is configured with 2 cells = {cell #A, cell #B} as the SCell, and UE #2 is configured with 2 cells = {cell #B, cell #C} as the SCell, the cell index for cell #B configured to UE #1 may be 2, and the cell index for cell #B configured to UE #2 may be 1. Therefore, when the MAC CE is transmitted in a GC manner, a method may be needed to specify a specific cell for different UEs. Additionally, unlike the SCell activation/deactivation described in [1], since up to 4 BWPs may be configured for each cell, 1 or 2 bits may be required to distinguish 4 BWPs per cell (when configured/indicated through a GC MAC CE). In the methods described later, a process for mapping each bit of the MAC CE to each SCell (of a specific UE) or a process for indicating each SCell through each bit of the MAC CE may be applied for BWP switching by mapping 2 bits of the MAC CE to each cell (of the UE) (and/or each BWP of each cell) or by indicating each cell (and/or each BWP of each cell) using 2 bits of the MAC CE.

[2-3] Regarding the issue mentioned in [2-2], when the MAC CE is transmitted in a GC manner, the method of indicating a specific cell to different UEs to ensure a common understanding may be determined according to one of the following methods (in combination of two or more). Each of the proposed methods below may be particularly applied to the UE configured with the NES mode. However, the present disclosure is not limited thereto.
- Method 1: For N cells (that may be configured for multiple UEs), a GC index may be configured through RRC signaling. For example, the GC index may be index #1, ..., index #N. When some M (<=N) cells are configured as the SCell for the UE, the GC index may be used as the index for the SCell. When the GC MAC CE indicates the GC index, BWP switching for the specific cell may be configured and/or indicated to multiple UEs.
   ■ In this case, information about the N cells (e.g., GC index) may be configured to each UE through UE-specific RRC signaling (before receiving the GC MAC CE)
   ■ In this case, by indicating the GC index through the GC MAC CE, the BWP switching for the specific cell may be configured and/or indicated in a GC manner.
   ■ Embodiment) The GC indices for 4 cells = {cell #A, cell #B, cell #C, cell #D} are defined as #1, #2, #3, and #4 in sequence. Each UE receives the information via UE-specific RRC signaling. The UE may be configured with some of the cells along with the indices thereof. UE #1 has {cell #A, cell #B} configured as SCell indices #1 and #2, UE #2 has {cell #B, cell #D} configured as SCell indices #2 and #4, and UE #3 has {cell #D} configured as SCell index #4. In this case, when the BS instructs BWP switching for the cell with index #4 through the GC MAC CE, (UE #1 may ignore the GC MAC CE and) UE #2 and UE #3 may apply the corresponding operation to cell #D.
- Method 2: For N cells (that may be configured for multiple UEs), mapping information between each bit (or field) of the GC MAC CE and the SCell index of each UE may be configured through RRC signaling. Subsequently, the BWP switching for the specific cell for multiple UEs may be configured and/or indicated through the GC MAC CE.
   ■ In this case, the mapping information may be configured to each UE through UE-specific RRC signaling (before receiving the GC MAC CE).
   ■ In this case, the mapping information may be configured in the form of a bitmap.
      ◆ Embodiment) It is assumed that among 4 cells = {cell #A, cell #B, cell #C, cell #D}, UE #1 has {cell #A, cell #B} configured as SCells and UE #2 has {cell #B, cell #C, cell #D} configured as SCells. If bitmap #1 = 1100 is configured for UE #1 through UE-specific RRC signaling, the UE may know that the configured SCells are the first and second cells among the total N cells. If bitmap #2 = 0111 is configured for UE #2 through UE-specific RRC signaling, the UE may know that the configured SCells are the second, third, and fourth cells among the total N cells. In this case, if BWP switching for the N cells is indicated through the GC MAC CE, each UE may determine which cells among the N cells are configured as the SCells. For example, if '0110' is configured/indicated through the GC MAC CE, UE #1 may apply the GC MAC CE indication to cell #B by performing an AND operation between '0110' and bitmap #1. Similarly, UE #2 may apply the GC MAC CE indication to cell #B and cell #C by performing an AND operation between '0110' and bitmap #2.
   ■ Alternatively, the mapping information may be configured based on an offset method.
      ◆ Embodiment) It is assumed that among 4 cells = {cell #A, cell #B, cell #C, cell #D}, UE #1 has {cell #A, cell #B} configured as SCells, and UE #2 has {cell #B, cell #C, cell #D} configured as SCells. If offset #1 = 0 is configured for UE #1 through UE-specific RRC signaling, the UE may know that the configured SCells are 2 cells starting from the lowest index among the total N cells. If offset #2 = 1 is configured for UE #2 through UE-specific RRC signaling, the UE may know that the configured SCells are 3 cells starting from the second lowest index among the total N cells. In this case, if the BWP switching for the N cells is indicated through the GC MAC CE, each UE may determine which cells among the N cells are configured as the SCells (for the UE). For example, if '0110' is configured/indicated through the GC MAC CE, UE #1 may apply only the first 2 bits from the left of'0110', and UE #2 may apply only the 3 bits starting from the second bit from the left.
- Method 3: Cell indications for K UEs may be serially concatenated to form the GC MAC CE that may be configured for multiple UEs. For example, the GC MAC CE may be configured such that indication information for each UE may be listed separately in the form of {information for UE #1, information for UE #2, ..., information for UE #N}. In this case, each UE may be assigned/configured with the positions of corresponding bits from the GC MAC CE (through separate RRC signaling or DCI). Upon receiving the GC MAC CE, the UE may extract and apply the configuration/indication for cells configured for the UE based on the assigned bit positions.
   ■ For example, it is assumed that among 4 cells = {cell #A, cell #B, cell #C, cell #D}, UE #1 has {cell #A, cell #B} configured as SCells, and UE #2 has {cell #B, cell #C, cell #D} configured as SCells. The GC MAC CE may be configured in the form of {"BWP switching indication for cell #A of UE #1", "BWP switching indication for cell #B of UE #1", "BWP switching indication for cell #B of UE #2", "BWP switching indication for cell #C of UE #2 ", "BWP switching indication for cell #D of UE #2"} (to represent only the cells configured for each UE). Alternatively, the GC MAC CE may be configured in the form of {"cell #A of UE #1", "cell #B of UE #1", ..., "cell #B of UE #2", "cell #C of UE #2", "cell #D of UE #2"} to represent the total number of cells, regardless of the number of cells configured for each UE.
- Method 4: The mapping information between each bit of the GC MAC CE and the index of the SCell of each UE is configured through separate (UE-dedicated) RRC signaling. Upon receiving the GC MAC CE, the UE may determine the BWP switching indication for SCells configured for the UE based on the mapping information.
   ■ For example, it is assumed that among 4 cells = {cell #A, cell #B, cell #C, cell #D}, UE #1 has {cell #A, cell #B} configured as SCells, and UE #2 has {cell #B, cell #C, cell #D} configured as SCells. In this case, cell #A of UE #1 may be mapped to the first bit of the GC MAC CE, cell #B of UE #1 and cell #B of UE #2 may be mapped to the second bit, cell #C of UE #2 may be mapped to the third bit, and cell #D of UE #2 may be mapped to the fourth bit. In this case, if the second bit of the MAC CE is 'set', both UE #1 and UE #2 may determine that BWP switching is configured/indicated for cell #B.
   ■ In another example, all (or some specific) SCells configured for UE #A may be mapped to specific bits of the GC MAC CE. All (or some specific) SCells configured for UE #B may be mapped to other specific bits of the GC MAC CE. Upon receiving the GC MAC CE, the UE may determine whether BWP switching for each SCell is configured/indicated (based on the mapping relationship between the SCell configured through RRC signaling and the bits of the MAC CE).

[2-4] When the methods in [2-3] are applied, each bit of the GC MAC CE may indicate a single cell or two or more cells. In this case, each UE may receive information on a set of cells indicated by each bit of the GC MAC CE or the number of cells indicated by each bit, through UE-specific RRC signaling.
- For example, each UE may be provided through RRC signaling that each bit of the GC MAC CE indicates a set of specific cells (e.g., intra-band contiguous carriers within a specific band). In this case, K different sets may be collectively activated or deactivated through the K bits of the GC MAC CE. In this case, BWP switching may be indicated collectively for K different sets through the K bits of the GC MAC CE,
- In another example, each UE may be provided through RRC signaling that the 1 bit of the GC MAC CE indicates G adjacent cells (e.g., 2 cells). In this case, BWP switching may be indicated collectively for K*G cells through the K bits of the GC MAC CE.

In this case, if SCells for the UE are configured in specific groups (e.g., the unit of the set of cells or the unit of G adjacent cells), the information indicated by each bit of the GC MAC CE may be configured together when the SCells are configured.

[2-5] If the physical cell ID of each cell is directly indicated through the GC MAC CE, the BWP switching configuration for a specific cell may be indicated collectively for multiple UEs.

[2-6] The proposed methods described above may be applied to one of the following cells.
- Opt 1: The proposed methods may be applied to all SCells configured (or configurable) for the UE.
- Opt 2: The proposed methods may be applied to a subset of all SCells configured (or configurable) for the UE.
- Opt 3: The proposed methods may be applied individually to a cell group (e.g., MCG or SCG) to which the cells configured (or configurable) for the UE belong.
- Opt 4: The proposed methods may be applied individually based on the FR to which the cells configured (or configurable) for the UE belong.
- Opt 5: The proposed methods may be applied individually based on the band type (e.g., licensed band or unlicensed band) to which the cells configured (or configurable) for the UE belong.
- Opt 6: The proposed methods may be applied to a PCell or PSCell configured (or configurable) for the UE.
   ■ For example, in the methods in [1-3] described above, the bitmap may include both PCells and SCells. Alternatively, some SCells may be replaced by PCells (or PSCells) and applied.

[2-7] The methods in [2-3] to [2-6] may also be applied to BWP switching through GC DCI. For example, each bit of the GC DCI may indicate a specific cell or set of cells (for multiple UEs) in the same way that each bit of the MAC CE (described above in Method 1 or 2 of [2-3]) indicates a specific cell. As another example, the GC DCI may be configured such that BWP switching indications for all UEs are listed consecutively (as in Method 3 of [2-3]). As a further example, the GC DCI may indicate a specific cell or set of cells (for multiple UEs) based on the mapping relationship between each bit of the DCI and the SCell of each UE (as in Method 4 of [2-3]).

### [3] Method of configuring/indicating NES BWP through GC MAC CE

[3-1] For the UE configured with the NES mode, if a single NES BWP is configured for each cell (configured for the corresponding UE), the activation or deactivation of the corresponding NES BWP may be configured and/or indicated to each UE through a GC MAC CE (or GC DCI). In other words, the bit index X of the GC MAC CE (or GC DCI) may be used to indicate the on/off (i.e., active/inactive) status of a NES BWP configured for a (specific) cell index Y. In this case, the mapping (or link) relationship between X and Y may be determined according to the methods described above. For example, if the bit index X of the GC MAC CE (or GC DCI) is indicated to be '1' (or '0'), the active (DL/UL) BWP for the cell Y may be switched to a NES BWP. If the bit index X of the GC MAC CE (or GC DCI) is indicated to be '0' (or '1'), the active (DL/UL) BWP for the cell Y may be switched to a non-NES BWP (or remain as the current active (DL/UL) BWP). Alternatively, if the bit index X of the GC MAC CE (or GC DCI) is indicated to be '0' (or '1'), the active (DL/UL) BWP for the cell Y may be switched to a non-NES BWP. If the bit index X of the GC MAC CE (or GC DCI) is indicated to be '1' (or '0'), the active (DL/UL) BWP for the cell Y may be switched to a NES BWP (or remain as the currently active BWP).

[3-2] For the UE configured with the NES mode, if two NES BWPs are configured for each cell, the activation/deactivation of the corresponding NES BWPs may be configured and/or indicated to each UE through a GC MAC CE (or GC DCI). In other words, the bit indices X1 and X2 of the GC MAC CE (or GC DCI) may be used to indicate the on/off (i.e., active/inactive) status of NES BWP #1 and NES BWP #2 configured for a (specific) cell index Y. In this case, the mapping (or link) relationship between X1, X2, NES BWP #1 of Y, and NES BWP#2 of Y may be determined according to the methods described above.
- Opt 1: X1 and X2 may be in the form of a bitmap. For example, two NES BWPs configured for a specific cell may be mapped to X1 and X2, respectively.
- Opt 2: X1 and X2 may be in the form of codepoints. In other words, 2 bits of X1 and X2 may be used to define 4 states (e.g., '00' = BWP #1, '01' = BWP #2, '10' = BWP #3, and '11' = BWP #4). One of the 4 defined states may be indicated through the 2 bits.

The contents of the present disclosure are not limitedly applied only to UL and/or DL signal transmission and reception. For example, the contents of the present disclosure may also be used for direct communication between UEs. In this document, the term based station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

### Implementation examples

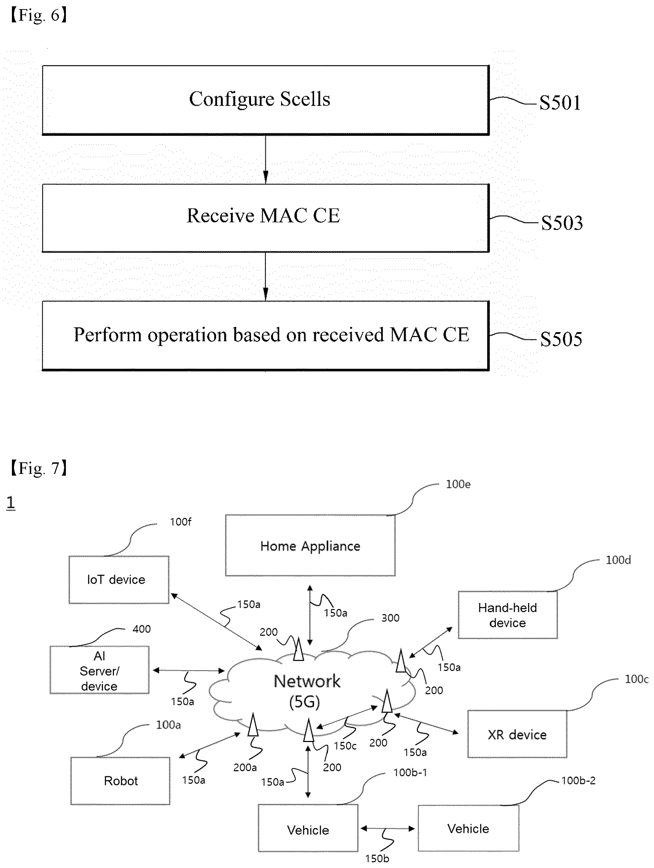

FIG. 6 is a flowchart of a resource configuration method according to embodiments of the present disclosure.

Referring to FIG. 6, the resource configuration method according to the embodiments of the present disclosure may include: configuring SCells (S501); receiving a MAC CE (S503); and performing operations based on the received MAC CE (S505). In addition to the operations in FIG. 6, at least one of the operations described in Sections [1] to [3] may also be performed.

For example, referring to Section [1], the MAC CE received in S503 may be a MAC CE for SCell activation/deactivation. As the operations corresponding to S505, the UE performs the activation or deactivation of the configured SCells based on the received MAC CE.

Referring to Section [2], the MAC CE received in S503 may be a MAC CE for BWP switching. As the operations corresponding to S505, the UE performs BWP switching for each configured SCell based on the received MAC CE.

Referring to Section [3], the MAC CE received in S503 may be a MAC CE for activating/deactivating a NES BWP. As the operations corresponding to S505, the UE activates or deactivates the NES BWP for each configured SCell based on the received MAC CE.

The MAC CEs described in FIG. 6 are all GC MAC CEs. Therefore, each MAC CE includes fields (bits) for first SCells configured for a specific UE and fields (bits) for second SCells configured for another UE. Specifically, the SCell activation/deactivation MAC CE includes C fields for indicating the activation and deactivation of the first SCells and C fields for indicating the activation and deactivation of the second SCells. The MAC CE for BWP switching includes fields for indicating BWP switching for the first SCells and the second SCells. The MAC CE for activating/deactivating the NES BWP includes fields for indicating the activation and deactivation of the NES BWP for the first SCells and the second SCells.

As methods for indicating specific operations in a GC manner, the methods in Sections [1-2], [2-2], and/or [3-2] may be used.

For example, according to Method 1 in Section [1-2], the indices of the first SCells and the indices of the second SCells may be GC indices that are applied to both the UE and the other UE. Alternatively, according to Method 2 or 4, mapping information between the indices of the first SCells and the C fields may be configured for the specific UE. Alternatively, according to Method 3, the positions of C fields for the specific UE among the C fields in the MAC CE may be configured for the specific UE.

The SCells for which the specific operations are instructed by the GC MAC CE may be cells within the range based on Sections [1-6] and/or [2-6]. Therefore, the first SCells may be all or some of the SCells configured (or configurable) for the UE. Alternatively, the first SCells may be cells belonging to a specific cell group (e.g., MCG or SCG), cells within a specific FR (e.g., FR1, FR2, or FR2-2), or cells within a specific band type (e.g., operation with or without shared spectrum) among the SCells configured or configurable for the UE. Furthermore, the GC MAC CE may be used not only for SCells but also for cells including PCells and PSCells.

Although not illustrated, BS operations corresponding to the UE operations may include: configuring first SCells for a first UE and configuring second SCells for a second UE through RRC signaling; and transmitting a MAC CE to the first UE and the second UE. The specific configuration of the MAC CE may be the same as described earlier in relation to the UE.

In addition to the operations described with reference to FIG. 6, one or more of the operations described with reference to FIGS. 1 to 5 and/or in Sections [1] to [3] may be combined and further performed.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 7 illustrates a communication system 1 applied to the present disclosure.

Referring to FIG. 7, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

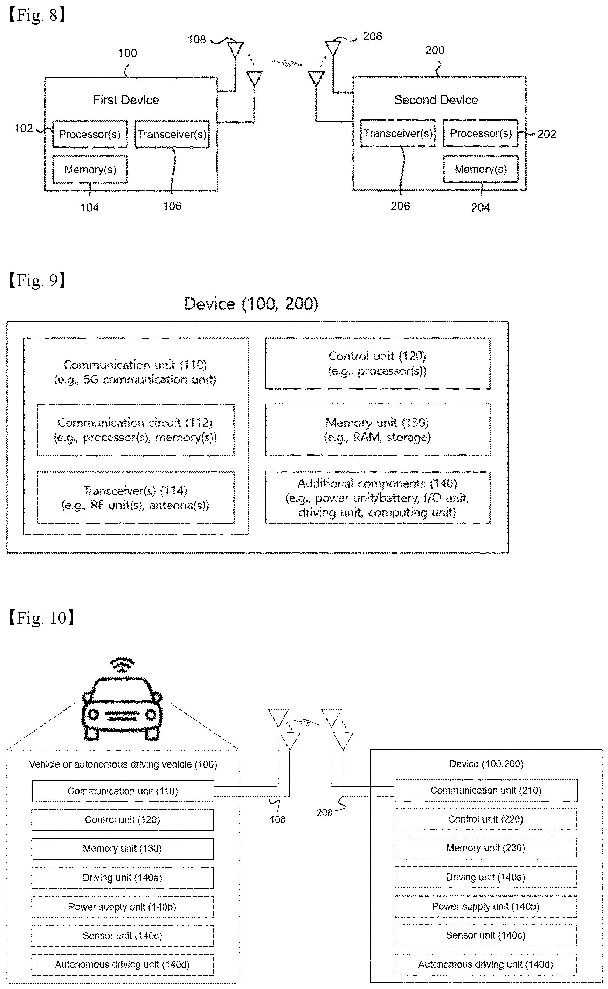

FIG. 8 illustrates wireless devices applicable to the present disclosure.

Referring to FIG. 8, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 7.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

FIG. 9 illustrates another example of a wireless device applied to the present disclosure. The wireless device may be implemented in various forms according to a use case/service (refer to FIG. 7).

Referring to FIG. 9, wireless devices 100 and 200 may correspond to the wireless devices 100 and 200 of FIG. 8 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 8. For example, the transceiver(s) 114 may include the one or more transceivers 106 and 206 and/or the one or more antennas 108 and 208 of FIG. 8. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 7), the vehicles (100b-1 and 100b-2 of FIG. 7), the XR device (100c of FIG. 7), the hand-held device (100d of FIG. 7), the home appliance (100e of FIG. 7), the IoT device (100f of FIG. 7), a digital broadcasting terminal, a hologram device, a public safety device, an MTC device, a medical device, a FinTech device (or a finance device), a security device, a climate/environment device, the AI server/device (400 of FIG. 7), the BSs (200 of FIG. 7), a network node, or the like. The wireless device may be mobile or fixed according to a use case/service.

In FIG. 9, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 10 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 10, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 9, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of configuring radio resources by a user equipment (UE) in a wireless communication system, the method comprising:
configuring first secondary cells (SCells);
receiving an SCell activation/deactivation medium access control (MAC) control element (CE); and
activating or deactivating each of the first SCells based on the received SCell activation/deactivation MAC CE,
wherein the SCell activation/deactivation MAC CE includes C fields for indicating activation and deactivation of the first SCells configured for the UE and second SCells configured for another UE.

2. The method of claim 1, wherein indices of the first SCells and indices of the second SCells are group common indices applied common to the UE and the other UE.

3. The method of claim 1, wherein based on that mapping information is configured between indices of the first SCells and the C fields, each of the first SCells is activated or deactivated.

4. The method of claim 1, wherein based on that information about positions of C fields for the UE among the C fields is configured, each of the first SCells is activated or deactivated.

5. The method of claim 1, further comprising:
receiving a MAC CE for bandwidth part (BWP) switching; and
performing the BWP switching for each of the first SCells based on the received MAC CE for the BWP switching,
wherein the MAC CE for the BWP switching includes fields for indicating the BWP switching for the first SCells and the second SCells.

6. The method of claim 1, further comprising:
receiving a MAC CE for activating/deactivating a network energy saving (NES) BWP; and
activating or deactivating the NES BWP for each of the first SCells based on the received MAC CE for activating/deactivating the NES BWP,
wherein the MAC CE for activating/deactivating the NES BWP includes fields for indicating activation and deactivation of the NES BWP for the first SCells and the second SCells.

7. The method of claim 1, wherein the first SCells are parts of SCells configured for the UE.

8. The method of claim 1, wherein the first SCells are cells belonging to a specific cell group among SCells configured for the UE.

9. The method of claim 1, wherein the first SCells are cells belonging to a specific frequency range among SCells configured for the UE.

10. The method of claim 1, wherein the first SCells are cells corresponding to a specific band type among SCells configured for the UE.

11. A user equipment (UE) configured to configure radio resources in a wireless communication system, the UE comprising:
at least one transceiver;
at least one processor; and
at least one memory operably connected to the at least one processor and storing instructions that, when executed, cause the at least one processor to perform specific operations comprising:
configuring first secondary cells (SCells);
receiving an SCell activation/deactivation medium access control (MAC) control element (CE); and
activating or deactivating each of the first SCells based on the received SCell activation/deactivation MAC CE,
wherein the SCell activation/deactivation MAC CE includes C fields for indicating activation and deactivation of the first SCells configured for the UE and second SCells configured for another UE.

12. An apparatus for a user equipment (LTE), the apparatus comprising:
at least one processor; and
at least one computer memory operably connected to the at least one processor and configured to, when executed, cause the at least one processor to perform operations comprising:
configuring first secondary cells (SCells);
receiving an SCell activation/deactivation medium access control (MAC) control element (CE); and
activating or deactivating each of the first SCells based on the received SCell activation/deactivation MAC CE,
wherein the SCell activation/deactivation MAC CE includes C fields for indicating activation and deactivation of the first SCells configured for the UE and second SCells configured for another UE.

13. A computer-readable non-volatile storage medium comprising at least one computer program configured to cause a user equipment (UE) having at least one processor to perform operations comprising:
configuring first secondary cells (SCells);
receiving an SCell activation/deactivation medium access control (MAC) control element (CE); and
activating or deactivating each of the first SCells based on the received SCell activation/deactivation MAC CE,
wherein the SCell activation/deactivation MAC CE includes C fields for indicating activation and deactivation of the first SCells configured for the UE and second SCells configured for another UE.
